# EUROPEAN PATENT SPECIFICATION

(11) **EP 3 048 325 B1**
(45) Date of publication and mention of the grant of the patent: **24.08.2022**
(21) Application number: 14845270.9
(22) Date of filing: 09.09.2014
(51) Int. Cl.: F16D 69/02

(54) **FRICTION MATERIAL AND FRICTION PAIR**
REIBUNGSMATERIAL UND REIBPAAR
MATÉRIAU DE FROTTEMENT ET COUPLE DE FRICTION

(30) Priority: 17.09.2013 JP 2013191473
(43) Date of publication of application: 27.07.2016
(73) Proprietor: Nisshinbo Brake Inc., Chuo-ku Tokyo 103-8650 (JP)
(72) Inventor: KAJI Shinya, Oura-gun Gunma 370-0614 (JP); YAMAGAMI Ryo, Oura-gun Gunma 370-0614 (JP); IWAI Tomomi, Oura-gun Gunma 370-0614 (JP)
(74) Representative: Flügel Preissner Schober Seidel
(86) International application number: PCT/JP2014/073779
(87) International publication number: WO 2015/041098

(56) References cited:
- EP-B1- 2 130 798
- WO-A1-2012/066969
- CN-A- 101 823 856
- JP-A- 2001 158 904
- JP-A- 2014 196 445
- US-A1- 2002 169 231
- US-A1- 2004 175 544
- M Sudheer ET AL: "Effect of potassium titanate whiskers on the performance of vacuum molded glass/epoxy composites", Journal of reinforced plastics and composites, 30 April 2013 (2013-04-30), pages 1177-1187, XP055508865, DOI: https://doi.org/10.1177%2F0731684413485827 Retrieved from the Internet: URL:http://journals.sagepub.com/doi/10.117 7/0731684413485827 [retrieved on 2018-09-21]

## Description

The present invention addresses the problem of providing a friction material for a disc brake pad, which is able to secure effective braking performance and wear resistance during the high speed and high load braking while satisfying laws and regulations relating to copper content. The solution to this problem is using a non-asbestos organic (NAO) friction material for a disc brake pad, which is formed by molding a friction material composition with the features of claim 1 and a friction pair consisting of a cast iron disc rotor and a friction material with the features of claim 2.

### [Detail Description]

### FRICTION MATERIAL

### [Field of Invention]

This invention relates to a friction material for a disc brake pad of an automobile or the like, which is manufactured by forming a non-asbestos-organic (NAO) friction material composition.

### [Background of Invention]

Conventionally, a disc brake is used as a brake device of an automobile, and a disc brake pad manufactured by fixing the friction material on a metallic base member is used as a friction member of the disc brake.

The friction material is classified into a semi-metallic friction material containing, as a fiber base material, 30 weight % or more but less than 60 weight % of a steel fiber relative to the total amount of the friction material composition, a low steel friction material containing a steel fiber in a part of the fiber base material as well as less than 30 weight % of the steel fiber relative to the total amount of the friction material composition, and the NAO friction material containing no steel-based fiber such as the steel fiber and a stainless steel fiber.

The friction material causing less braking noise is demanded of late years, it is a recent trend to use the disc brake pad that uses the NAO friction material that does not contain the steel fiber and/or the steel-based fiber but mainly contains such as a binder, a fiber base material, a lubricant, a titanate, an inorganic friction modifier, an organic friction modifier, pH adjuster, and a filler.

For the NAO friction material for the disc brake pad, in order to secure the effective braking performance and wear resistance during the high speed and high load braking, 5-20 weight % of a copper component such as fibers and/or particles of copper and/or copper alloy relative to the total amount of the friction material composition, is added as a necessary component.

However, recently, the above-described friction material, when braking, discharges the copper as abrasion powder, and it is suggested that the discharged copper flows in a river, lake, and/or ocean and then the copper possibly contaminates an area around the discharged copper.

Because of these background, for example, California State (CA) and Washington State (WA) of the United States of America passed a bill to prohibit the sales of the friction member using the friction material containing 5 weight % or more of the copper component relative to the total amount of the friction material composition and an act of assembling the subject friction material in a new car from the year of 2021, and the sales of the friction member using the friction material containing 0.5 weight % or more of the copper component relative to the total amount of the friction material composition and an act of assembling the subject friction material in a new car several years later from above year of 2021.

Then, as this type of laws and regulations is expected to be spread out in the world from now on, the elimination of the copper component contained in the NAO friction material is urgently needed, and a primary issue is to improve the effective braking performance and wear resistance during the high speed and high load braking, which tend to be reduced due to the elimination of the copper component contained in the NAO friction material.

US Provisional Patent Publication No. 2010/0331447 discloses the friction material, which is manufactured by forming the friction material composition containing 0.5-50 weight % of the metallic tin or tin alloy relative to the total amount of the friction material composition and 0.001-4.999 weight % of the copper relative to the total amount of the friction material composition.

Japanese Provisional Patent Publication No. 2012-255052 discloses the non-asbestos friction material composition containing a binder, an organic filler, an inorganic filler, and a fiber base material where the amount of the copper contained in the friction material composition as the copper element is 5 mass % or less and the metallic fiber other than the copper and coper alloy contained therein is 0.5 mass % or less while the non-asbestos friction material composition contains a titanate, a zirconium oxide with the particle diameter of 30µm or less and 10-35 mass % of the titanate relative to the total amount of the friction material composition but does not contain zirconium oxide with the particle diameter of over 30µm and a friction member consisting of a friction material which is manufactured by forming the non-asbestos friction material composition and a back plate.

However, the friction materials disclosed in US Provisional Patent Publication No. 2010/0331447 and Japanese Provisional Patent Publication No. 2012-255052 are satisfying law relating to the required 5 weight % or less of the copper component contained therein but cannot be said to sufficiently prove the demanded performance in the effective braking performance and the wear resistance during the high speed and high load braking.

Chinese Provisional Patent Publication No. 101 823 856 discloses a copper free friction material containing phenolic resin, fiber, and 5-30 weight % of magnesium oxide with the particle diameter of 10-400 µm, and 3-8 weight % of aluminum particles.

US Provisional Patent Publication No. 2004/175544 and US Provisional Patent Publication No. 2002/169231 describe further examples of friction materials.

### [Summary of Invention]

### [Problems to be Resolved by this Invention]

An object of this invention is to provide a friction material manufactured by forming a non-asbestos-organic friction material composition, which is used for a disc brake pad, in which the friction material is able to secure an effective braking performance and a wear resistance during the high speed and high load braking while satisfying laws and regulations relating to the required amount of the copper component contained therein.

The inventors, after serious investigation, completed this invention as finding that the above-identified problems may be resolved by using the friction material with the features of claim 1 and a friction pair consisting of a cast iron disc rotor and a friction material with the features of claim 2.

(2) The aluminum particle or the alloy particle mainly containing aluminum of the friction material may have an average particle diameter of 50-300µm.

### [Advantage of the Invention]

This invention provides the friction material used for the disc brake pad, which is manufactured by forming the NAO friction material composition, where the friction material secures the effecttive braking performance and wear resistance during the high speed and high load braking while satisfying laws and regulations relating to the required amount of the copper component contained therein.

### [Embodiments of this Invention]

In this invention, the friction material for a disc brake pad, which is manufactured by forming the non-asbestos-organic (NAO) friction material composition, uses the friction material composition with the features of claim 1.

Metal such as zinc, tin, aluminum or the like and/or alloy containing such the metal utilized as the inorganic friction modifier has high affinity with cast iron for the material of the disc rotor and generates adhesive friction between the above-described metal or alloy existing on the friction surface of the friction material and the cast iron disc rotor during the braking to influence on the increase of the friction coefficient.

By adding zinc, tin, and/or alloy mainly containing these metals to the friction material, the adhesive friction occurs in a wide range of usage to improve the friction coefficient; however, the advance of the adhesive friction tends to facilitate the wear of the friction material.

However, the aluminum causes the adhesive friction only when the high speed and high load braking, and therefore the above-described problem does not exist for aluminum.

This is presumed because of the characteristics of aluminum having tendency to form an oxide film on the surface.

Because the oxide film formed on the aluminum surface hinders the adhesive friction of the aluminum and cast iron, aluminum is not used for the friction modifier to increase the friction coefficient in the area where the oxide film is being maintained and the load is relatively low.

However, during the high speed and high load braking, aluminum is deformed or melted to destroy the oxide film that could be a hindering factor of the adhesive friction. As a result, the adhesive friction between aluminum and cast iron occurs to improve the braking effect.

Also, this advantage can be seen in the alloy mainly containing aluminum.

An average diameter of the aluminum particle or the alloy particle mainly containing aluminum is preferably in the range of 50 - 300µm; and an average diameter of the aluminum fiber or the alloy fiber mainly containing aluminum is preferably in the range of 20 - 100µm while an average fiber length thereof is preferably in the range of 0.5 - 10mm. In consideration of uniform dispersibility in the friction material, the aluminum particle and/or the alloy mainly containing the aluminum is preferably used.

The alloy mainly containing aluminum may be the materials containing 90 weight % of aluminum such as aluminum-zinc alloy, aluminum-copper alloy, aluminum-manganese alloy, aluminum-silicon alloy, aluminum-magnesium alloy, aluminum-magnesium silicon- alloy, aluminum-zinc-magnesium alloy.

When aluminum-copper- alloy is used, the total amount of the copper component is set to be less than 0.5 weight % relative to the total amount of the friction material composition.

In addition, in view of the environmental load reduction, the friction material composition preferably should not contain copper component.

The hard inorganic particle with the Mohs' hardness of 4.5 or higher is used as the friction modifier to increase the friction coefficient in the normal area of usage with relatively less load where aluminum and alloy mainly containing aluminum do not have an influence thereon.

The hard inorganic particle with Mohs' hardness of 4.5 or higher and the average particle diameter of 1 - 20µm may be used, and the content thereof is 5 - 20 weight % relative to the total anount of the friction material composition so as to secure the effective braking performance and noise prevention in the normal area of usage with relatively low load.

The hard inorganic particle with the Mohs' hardness of 4.5 or more may not be limited to such as activated alumina, magnesium oxide, zirconium silicate, alumina, and silicon carbide but may extend to other hard inorganic particles with the Mohs' hardness of 4.5 or higher generally added to the friction material.

Also, Mohs' hardness used in this invention is original (old) Mohs' hardness scale represented by 1. Talc, 2. Gypsum, 3. Calcite, 4. Fluorite, 5. Apatite, 6. Orthoclase, 7. Quartz, 8. Topaz, 9. Corundum, and 10. Diamond.

In addition, in this invention, the average particle diameter is measured by a Laser Diffraction-type Particle Size Distribution Measuring Method to determine 50% particle diameter, and the average value is calculated by measuring the average fiber diameter and the average fiber length of 50 random samples with the optical microscope.

The friction material of this invention is made of the friction material composition comprising the above-described aluminum particle, alloy particle mainly containing aluminum, aluminum fiber, alloy fiber mainly containing aluminum, hard inorganic particle with the average particle diameter of 1 - 20µm and Mohs' hardness of 4.5 or higher and generally used materials that are used as the binder, fiber base material, titanate, lubricant, inorganic friction modifier, organic friction modifier, pH adjuster, or the filer..

The binder may be one or any combination of two or more of the conventionally used material for binders of the friction material such as a straight phenolic resin, a resin mmodified by modified by cashew oil, silicon oil, or various elastomers such as acrylic rubber, an aralkyl modified phenolic resin obtained by reacting phenolic compound, aralkyl ether compound and aldehyde compound, a thermosetting resin dispersing such as various elastomer and fluorine polymer in the phenolic resin. The amount of the binder contained therein is preferably 4 - 12 weight % and more preferably 5 - 8 weight% relative to the total amount of the friction material composition.

The fiber base material may be one or any combination of two or more of the conventionally used organic fiber for the friction material such as an aramid fiber, a cellulose fiber, a poly para-phenylene benzobisoxazole fibers, and an acrylic fiber. The amount of the fiber base material contained therein is preferably 1 - 7 weight % and more preferably 2 - 4 weight % relative to the total amount of the friction material composition.

The titanate is preferably in a sheet shape or an indeterminate shape having pluraliy of convex portions and may be one or any combination of two or more of conventionally used titanate used for friction material such as potassium titanate, lithium potassium titanate, and magnesium potassium titanate. The amount of the titanate contained therein is preferably 7 - 35 weight %, and more preferably 17 - 25 weight % relative to the total amount of the friction material composition.

The lubricant may be one or any combination of two or more of the conventionally used the lubricant conventionally used for the friction material such as the metal sulfide type lubricant such as a molybdenum disulfide, a zinc sulfide, a tin sulfide, an iron sulfide, and a composite metal sulfide and the carbon type lubricant such as an artificial graphite, a natural graphite, a petroleum coke, an activated carbon, and a polyacrylonitrile oxidized fiber pulverized powder. The amount of the lubricant contained therein is preferably 2 - 21 weight %, more preferably 10 - 16 weight % relative to the total amount of the friction material composition.

For the inorganic friction modifier, other than the above-described aluminum particles, alloy particles mainly containing aluminum, aluminum fiber, alloy fiber mainly containing aluminum, and the hard inorganic particles with the average particle diameter of 1 - 20µm and Mohs' hardness of 4.5 or higher, the inorganic friction modifier may be one or any combination of the two or more of the particle inorganic friction modifier such as a talc, a mica, and a vermiculite and the fiber inorganic friction modifier such as a wollastonite, a sepiolite , a basalt fiber, a glass fiber, a biosoluble artificial mineral fiber, and a rock wool. The amount of the inorganic friction modifier contained therein, in addition to the above-described aluminum particle, alloy particle mainly containing aluminum, aluminum fiber, alloy fiber mainly containing aluminum, and the hard inorganic particle with the average particle diameter of 1 - 20µm and Mohs' hardness of 4.5 or higher, is preferably 15 - 50 weight %, more preferably 20 - 45 weight % relative to the total amount of the friction material composition

The organic friction modifier may be one or any combination of two or more of the organic friction modifiers conventionally used for the friction material such as a cashew dust, a powder of tire tread rubber, an unvulcanized rubber powder such as a nitrile rubber, an acrylic rubber, a silicone rubber, and an isobutylene-isoprene rubber or an vulcanized rubber powder vulcanized such a rubber. The amount of the organic friction modifier contained therein is preferably 3 - 8 weight %, more preferably 4 - 7 weight % relative to the total amount of the friction material composition.

The pH adjuster may be pH adjuster conventionally used for the friction material such as the calcium hydroxide. The amount of the pH adjuster is preferably 2 - 6 weight %, more preferably 2 - 3 weight % relative to the total amount of the friction material composition.

As the reminders of the friction material composition, filler such as barium sulfate and calcium carbonate may be used.

The friction material used in the disc brake of this invention is manufactured through the mixing step of uniformly mixing the predetermined amount of friction material composition oriented therein using a mixer, the heat press forming step of heat press forming the obtained raw friction material mixture positioned in the heat forming die superposed on the separately pre-cleaned, surface treated, and adhesive applied back plate, the heat treatment step of heating the obtained molded product to complete the cure reaction of the binder, the electrostatic powder coating step of coating the powder coating thereon, the baking step of baking the coating, and the grinding step of forming the friction surface by the rotary grinding wheel. Also, after the heat press forming step, the heat treatment step performing both the coating step and baking step may be replaced before the grinding step.

As necessary, prior to the heat press forming step, the granulation step of granulating the raw friction material mixture, the kneading step of kneading the raw friction material, and the pre-forming step of forming an unfinished preformed article by positioning the raw friction material mixture or the granulation obtained through the granulation step and the kneaded article obtained through the kneading step into the pre-forming die, are performed, and after the heat press forming step, the scorching step is performed.

### [Embodiments]

In the following sections, the embodiments and the comparative examples are shown; however, this invention is not limited to the embodiments described below.

### [Manufacturing Method for Friction Material in Embodiments 1 - 11 and Comparative Examples 1 - 4]

The friction material composition shown in TABLE 1 and TABLE 2 is mixed for 5 minutes by the Loedige mixer and is pressed in the forming die under 30MPa for 10 seconds to perform the preforming. This preforming product is superposed on the pre-cleaned, surface treated, adhesive coated steel back plate to form for 10 minutes in the heat forming die at the forming temperature of 150 centigrade under the forming pressure of 40MPa, to heat treatment (post-curing) for 5 hours at 200 centigrade, and to grind to form the friction surface for the disc brake pad of the automotive (Embodiments 1 - 11 and Comparative Examples 1 - 4).

**TABLE 1**

| | Embodiments | | | | | | | | | | |
|---|---|---|---|---|---|---|---|---|---|---|---|
| | 1 | 2 | 3 | 4 | 5 | 6 | 7 | 8 | 9 | 10 | 11 |
| Straight Phenol Resin | 7.0 | 7.0 | 7.0 | 7.0 | 7.0 | 7.0 | 7.0 | 7.0 | 7.0 | 7.0 | 7.0 |
| Copper Fiber | | | | | | | | | | | |
| Aramid Fiber | 2.0 | 2.0 | 2.0 | 2.0 | 2.0 | 2.0 | 2.0 | 2.0 | 2.0 | 2.0 | 2.0 |
| Potassium Hexatitanate | 20.0 | 20.0 | 20.0 | 20.0 | 20.0 | 20.0 | 20.0 | 20.0 | 20.0 | 20.0 | 20.0 |
| Zinc Sulfide | 1.0 | 1.0 | 1.0 | 1.0 | 1.0 | 1.0 | 1.0 | 1.0 | 1.0 | 1.0 | 1.0 |
| Graphite | 3.0 | 3.0 | 3.0 | 3.0 | 3.0 | 3.0 | 3.0 | 3.0 | 3.0 | 3.0 | 3.0 |
| Cokes | 2.0 | 2.0 | 2.0 | 2.0 | 2.0 | 2.0 | 2.0 | 2.0 | 2.0 | 2.0 | 2.0 |
| Aluminum Particles (Average Particle Diameter = 50µm) | 10.0 | | | | | | | | | | |
| Aluminum Particles (Average Particle Diameter = 100µm) | | 5.0 | | | 3.0 | | | 3.0 | | 5.0 | 5.0 |
| Aluminum Particles (Average Particle Diameter = 300µm) | | | 1.0 | | | | | | | | |
| Aluminum Particles (Average Particle Diameter = 400µm) | | | | 1.0 | | | | | | | |
| Aluminum (95 Weight %) - Zinc (5 Weight %) Alloy Particle (Average Particle Diameter 100µm) | | | | | 2.0 | 5.0 | | | | | |
| Aluminum (95 Weight %) - Copper (5 Weight %) Alloy Particle (Average Particle Diameter 100µm) | | | | | | | 5.0 | | | | |
| Aluminum Fiber (Average Fiber Diameter 50µm, Average Fiber Length 3.0mm) | | | | | | | | 2.0 | 5.0 | | |
| Tin Particle (Average Particle Diameter 100µm) | | | | | | | | | | | |
| Zirconium Silicate (Average Particle Diameter 0.5µm) | | | | | | | | | | | |
| Zirconium Silicate (Average Particle Diameter 1 µm) | 8.0 | 8.0 | 8.0 | 8.0 | 8.0 | 8.0 | 8.0 | 8.0 | 8.0 | 20.0 | |
| Zirconium Silicate (Average Particle Diameter 20µm) | | | | | | | | | | | 5.0 |
| Zirconium Silicate (Average Particle Diameter 30µm) | | | | | | | | | | | |
| Activated Alumina (Average Particle Diameter 5µm) | 2.0 | 2.0 | 2.0 | 2.0 | 2.0 | 2.0 | 2.0 | 2.0 | 2.0 | | |
| Mica | 11.0 | 11.0 | 11.0 | 11.0 | 11.0 | 11.0 | 11.0 | 11.0 | 11.0 | 11.0 | 11.0 |
| Vermiculite | 2.0 | 2.0 | 2.0 | 2.0 | 2.0 | 2.0 | 2.0 | 2.0 | 2.0 | 2.0 | 2.0 |
| Rockwool | 3.0 | 3.0 | 3.0 | 3.0 | 3.0 | 3.0 | 3.0 | 3.0 | 3.0 | 3.0 | 3.0 |
| Cashew Dust | 3.0 | 3.0 | 3.0 | 3.0 | 3.0 | 3.0 | 3.0 | 3.0 | 3.0 | 3.0 | 3.0 |
| Powder of tire tread rubber | 2.0 | 2.0 | 2.0 | 2.0 | 2.0 | 2.0 | 2.0 | 2.0 | 2.0 | 2.0 | 2.0 |
| Calcium Hydroxide | 3.0 | 3.0 | 3.0 | 3.0 | 3.0 | 3.0 | 3.0 | 3.0 | 3.0 | 3.0 | 3.0 |
| Barium Sulfate | 21.0 | 26.0 | 30.0 | 30.0 | 26.0 | 26.0 | 26.0 | 26.0 | 26.0 | 16.0 | 31.0 |
| TOTAL | 100.0 | 100.0 | 100.0 | 100.0 | 100.0 | 100.0 | 100.0 | 100.0 | 100.0 | 100.0 | 100.0 |

**TABLE 2**

| | Comparative Examples | | | |
|---|---|---|---|---|
| | 1 | 2 | 3 | 4 |
| Straight Phenol Resin | 7.0 | 7.0 | 7.0 | 7.0 |
| Copper Fiber | | | | 6.0 |
| Aramid Fiber | 2.0 | 2.0 | 2.0 | 2.0 |
| Potassium Hexatitanate | 20.0 | 20.0 | 20.0 | 20.0 |
| Zinc Sulfide | 1.0 | 1.0 | 1.0 | 1.0 |
| Graphite | 3.0 | 3.0 | 3.0 | 3.0 |
| Cokes | 2.0 | 2.0 | 2.0 | 2.0 |
| Aluminum Particles (Average Particle Diameter = 50µm) | | | | |
| Aluminum Particles (Average Particle Diameter = 100µm) | | 5.0 | 5.0 | |
| Aluminum Particles (Average Particle Diameter = 300µm) | | | | |
| Aluminum Particles (Average Particle Diameter = 400µm) | | | | |
| Aluminum (95 Weight %) - Zinc (5 Weight %) Alloy Particle (Average Particle Diameter 100µm) | | | | |
| Aluminum (95 Weight %) - Copper (5 Weight %) Alloy Particle (Average Particle Diameter 100µm) | | | | |
| Aluminum Fiber (Average Fiber Diameter 50µm, Average Fiber Length 3.0mm) | | | | |
| Tin Particle (Average Particle Diameter 100µm) | 5.0 | | | |
| Zirconium Silicate (Average Particle Diameter 0.5µm) | | | 20.0 | 20.0 |
| Zirconium Silicate (Average Particle Diameter 1µm) | 8.0 | | | |
| Zirconium Silicate (Average Particle Diameter 20µm) | | | | |
| Zirconium Silicate (Average Particle Diameter 30µm) | | 5.0 | | |
| Activated Alumina (Average Particle Diameter 5µm) | 2.0 | | | |
| Mica | 11.0 | 11.0 | 11.0 | 11.0 |
| Vermiculite | 2.0 | 2.0 | 2.0 | 2.0 |
| Rockwool | 3.0 | 3.0 | 3.0 | 3.0 |
| Cashew Dust | 3.0 | 3.0 | 3.0 | 3.0 |
| Powder of tire tread rubber | 2.0 | 2.0 | 2.0 | 2.0 |
| Calcium Hydroxide | 3.0 | 3.0 | 3.0 | 3.0 |
| Barium Sulfate | 26.0 | 31.0 | 16.0 | 15.0 |
| TOTAL | 100.0 | 100.0 | 100.0 | 100.0 |

The effective braking performance and wear resistance during the high speed and high load braking were evaluated for the obtained friction material. Table 3 and Table 4 show the evaluation result and table 5 shows the evaluation standard.

**TABLE 3**

| | Embodiments | | | | | | | | | | |
|---|---|---|---|---|---|---|---|---|---|---|---|
| | 1 | 2 | 3 | 4 | 5 | 6 | 7 | 8 | 9 | 10 | 11 |
| Effective Braking Performance in Normal Area of Usage | ⊚ | ⊚ | ⊚ | ⊚ | ⊚ | ⊚ | ⊚ | ⊚ | ⊚ | ○ | ⊚ |
| Effective Braking Performance during the high speed and high load braking action | ○ | ⊚ | ⊚ | ⊚ | ⊚ | ⊚ | ⊚ | ○ | △ | ⊚ | ⊚ |
| Wear Resistance | ⊚ | ⊚ | ○ | | ⊚ | ⊚ | ⊚ | ⊚ | ⊚ | ⊚ | ○ |
| Brake Noise | ⊚ | ⊚ | ⊚ | ⊚ | ⊚ | ⊚ | ⊚ | ⊚ | ⊚ | ⊚ | △ |

**TABLE 4**

| | Comparative Example | | | |
|---|---|---|---|---|
| | 1 | 2 | 3 | 4 |
| Effective Braking Performance in Normal Area of Usage | ⊚ | ⊚ | × | ⊚ |
| Effective Braking Performance during the high speed and high load braking action | × | ⊚ | ⊚ | ⊚ |
| Wear Resistance | × | △ | ⊚ | ⊚ |
| Brake Noise | ⊚ | × | ⊚ | ⊚ |

**TABLE 5**

| | | | | |
|---|---|---|---|---|
| Evaluation Items | Effective Braking Performance in Normal Area of Usage | Effective Braking Performance during the high speed and high load braking action | Wear Resistance | Brake Noise |
| Evaluation Method | JASO C406 | JASO C406 | | JASO C404 |
| | Second Effect Test 50 km/h **→** 0 km/h Hydraulic Pressure (4MP a) | auto motor und sport (AMS), German Automobile Journal High Speed Pattern Simulation Test, 150% condition | | |
| | | 240 km/h → 5km/h (Deceleration 0.6G) × 1 Cycle | | |
| | Average µ of Five Cycle | Average µ min value of Final Braking | Amount of Wear of Friciton Material | Probability of Braking Noise Generation |
| ⊚ | 0.42 or more, less than 0.46 | 0.20 or more | Less than 2.0mm | Less than 1.0% |
| ○ | 0.38 or more, less than 0.42 | Less than 0.20, 0.15 or more | 2.0 mm or More, less than 3.0 mm | 1.0% or More, less than 1.5% |
| △ | 0.34 or more, less than 0.38 | Less than 0.15, 0.10 or more | 3.0 mm or More, less than 4.0 mm | 1.5% or More, less than 2.0% |
| × | Less than 0.34 | Less than 0.10 | 4.0 mm or More | 2.0% ore More |

From the evaluation results of Table 3 and Table 4, in the friction material in the embodiments, although the compositions used therein has no copper component contained or has very minor amount, if ever contained, such as less than 0.5 weight %, the friction material is expected to provide sufficient effective brake performance, wear resistance, and braking noise restriction in a wide range of usage, and the embodiments 2, and 5-7 provides comparative performance comparing to the comparative example that uses the copper fiber.

### [Industrial Applicability]

According to this invention, in the friction material utilized for disc brake pad, which is manufactured by forming the NAO friction material composition, the friction material secures the demanded effective braking performance, the wear resistance, and the noise prevention, while satisfying laws relating to the required amount of the copper component contained therein, which provides an extreme practical valuable.

## Claims

1. A friction material which is a non-asbestos-organic (NAO) friction material utilized for a disc brake pad,
which is used with a cast iron disc rotor and is manufactured by forming a friction material composition comprising of a fiber base material, a binder, and a friction modifier,
**characterized in that** said friction material composition, as an inorganic friction modifier, contains:
1 -10 weight %, relative to a total amount of the friction material composition, of one or any combination of two or more of aluminum particle and alloy particle mainly containing aluminum;
5 - 20 weight %, relative to the total amount of the friction material composition, of a hard inorganic particle with an average particle diameter of 1 - 20 µm and the Mohs' hardness of 4.5 or higher;
and 7 - 35 weight %, relative to the total amount of the friction material composition, of titanate which is in a sheet shape or an indeterminate shape having plurality of convex portions;
and contains only an organic fiber as the fiber base material;
and a total amount of a copper component contained in the friction material composition is less than 0.5 weight % relative to the total amount of the friction material composition.

2. A friction pair consisting of a cast iron disc rotor and a friction material which is a non-asbestos-organic (NAO) friction material utilized for a disc brake pad and is manufactured by forming a friction material composition comprising of a fiber base material, a binder, and a friction modifier,
**characterized in that** said friction material composition, as an inorganic friction modifier, contains:
1 -10 weight %, relative to a total amount of the friction material composition, of one or any combination of two or more of aluminum particle, aluminum fiber, alloy particle mainly containing aluminum, and alloy fiber mainly containing aluminum;
5 - 20 weight %, relative to the total amount of the friction material composition, of a hard inorganic particle with an average particle diameter of 1 - 20 µm and the Mohs' hardness of 4.5 or higher;
and 7 - 35 weight %, relative to the total amount of the friction material composition, of titanate; and
a total amount of a copper component contained in the friction material composition is less than 0.5 weight % relative to the total amount of the friction material composition.

3. The friction material according to claim 1 or the friction pair according to claim 2, **characterized in that** the aluminum particle or the alloy particle mainly containing aluminum has an average particle diameter of 50 - 300µm.

## Patentansprüche

1. Ein Reibungsmaterial, welches ein asbestfreies, organisches Reibungsmaterial (NAO) zur Verwendung als Scheibenbremsbelag ist,
das mit einer gusseisernen Rotorscheibe verwendet wird und durch Bilden einer Reibungsmaterialzusammensetzung, umfassend ein Faserbasismaterial, ein Bindemittel und ein Reibungsmodifizierungsmittel, hergestellt wird,
**dadurch gekennzeichnet, dass** die Reibungsmaterialzusammensetzung als anorganisches Reibungsmodifizierungsmittel enthält:
1 - 10 Gewichts-%, bezogen auf die Gesamtmenge der Reibungsmaterialzusammensetzung, eines oder eine Kombination von zwei oder mehreren Aluminiumteilchen bzw. Legierungsteilchen, die hauptsächlich Aluminium enthalten;
5 - 20 Gewichts-%, bezogen auf die Gesamtmenge der Reibungsmaterialzusammensetzung, harte anorganische Teilchen mit einem mittleren Teilchendurchmesser von 1 - 20 µm und einer Mohshärte von 4,5 oder mehr; und
7 - 35 Gewichts-%, bezogen auf die Gesamtmenge der Reibungsmaterialzusammensetzung, eines Titanats, das blattförmig ist oder eine unbestimmte Form mit mehreren konvexen Teilbereichen darstellt;
und nur organische Fasern als Faserbasismaterial enthält;
und die Gesamtmenge eines in der Reibungsmaterialzusammensetzung enthaltenen Kupferbestandteils weniger als 0,5 Gewichts-%, bezogen auf die Gesamtmenge des Reibungsmaterialzusammensetzung, beträgt.

2. Reibpaar, bestehend aus einer gusseisernen Rotorscheibe und einem Reibungsmaterial, das ein asbestfreies, organisches Reibungsmaterial (NAO) zur Verwendung als Scheibenbremsbelag ist, hergestellt durch Bilden einer Reibungsmaterialzusammensetzung, umfassend ein Faserbasismaterial, ein Bindemittel und ein Reibungsmodifizierungsmittel,
**dadurch gekennzeichnet, dass** die Reibungsmateriatzusammensetzung als anorganisches Reibungsmodifizierungsmittel enthält;
1 - 10 Gewichts-%, bezogen auf die Gesamtmenge der Reibungsmaterialzusammensetzung, eines oder eine Kombination von zwei oder mehreren Aluminiumteilchen, Aluminiumfasern bzw. Legierungsteilchen, die hauptsächlich Aluminium enthalten;
5 - 20 Gewichts-%, bezogen auf die Gesamtmenge der Reibungsmaterialzusammensetzung, harte anorganische Teilchen mit Mohshärte von 4,5 oder mehr; und
7 - 35 Gewichts-%, bezogen auf die Gesamtmenge der Reibungsmaterialzusammensetzung, eines Titanats;
und die Gesamtmenge eines in der Reibungsmaterialzusammensetzung enthaltenen Kupferbestandteils weniger als 0,5 Gewichts-%, bezogen auf die Gesamtmenge des Reibungsmaterialzusammensetzung, beträgt.

3. Das Reibungsmaterial nach Anspruch 1 oder das Reibpaar nach Anspruch 2, **dadurch gekennzeichnet, dass** die Aluminiumteilchen oder die Legierungsteilchen, die hauptsächlich Aluminium enthalten, einen durchschnittlichen Teilchendurchmesser von 50 - 300 µm aufweisen.

## Revendications

1. Le matériau de friction qui est un matériau de friction sans amiante organique (NAO) utilisé pour une plaquette de frein à disque,
qui est utilisé avec un rotor de disque en fonte et est fabriqué en formant une composition de matériau de friction comprenant un matériau de base en fibres, un liant et un modificateur de friction,
**caractérisé en ce que** ladite composition de matériau de friction, en tant que modificateur de friction inorganique, contient :
1 - 10 % en poids, par rapport à la quantité totale de la composition de matériau de friction, d'une ou de toute combinaison de deux ou plus de particules d'aluminium et de particules d'alliage contenant principalement de l'aluminium ;
5 - 20 % en poids, par rapport à la quantité totale de la composition du matériau de friction, d'une particule inorganique dure avec un diamètre moyen de particule de 1 - 20 µm et une dureté Mohs de 4,5 ou plus ; et
7 - 35 % en poids, par rapport à la quantité totale de la composition du matériau de friction, de titanate qui se présente sous la forme d'une feuille ou d'une forme indéterminée ayant une pluralité de parties convexes ;
et ne contient qu'une fibre organique comme matériau de base des fibres ;
et une quantité totale d'un composant de cuivre contenu dans la composition de matériau de friction est inférieure à 0,5 % en poids par rapport à la quantité totale de la composition de matériau de friction.

2. La paire de friction constituée d'un rotor de disque en fonte et d'un matériau de friction qui est un matériau de friction sans amiante-organique (NAO) utilisé pour une plaquette de frein à disque et qui est fabriqué en formant une composition de matériau de friction comprenant un matériau de base en fibres, un liant et un modificateur de friction,
**caractérisé en ce que** ladite composition de matériau de friction, en tant que modificateur de friction inorganique, contient :
1 - 10 % en poids, par rapport à la quantité totale de la composition de matériau de friction, d'une ou de toute combinaison de deux ou plus de particules d'aluminium, de fibres d'aluminium, de particules d'alliage contenant principalement de l'aluminium et de fibres d'alliage contenant principalement de l'aluminium ;
5 - 20 % en poids, par rapport à la quantité totale de la composition du matériau de friction, d'une particule inorganique dure avec un diamètre moyen de particule de 1 - 20 µm et une dureté Mohs de 4,5 ou plus ; et
7 - 35 % en poids, par rapport à la quantité totale de la composition du matériau de friction, de titanate ; et
une quantité totale d'un composant de cuivre contenu dans la composition de matériau de friction est inférieure à 0,5 % en poids par rapport à la quantité totale de la composition de matériau de friction.

3. Le matériau de friction selon la revendication 1 ou la paire de friction selon la revendication 2, **caractérisé en ce que** la particule d'aluminium ou la particule d'alliage contenant principalement de l'aluminium a un diamètre moyen de particule de 50 - 300 µm.
